# EUROPÄISCHE PATENTANMELDUNG

(11) **EP 1 205 225 A1**
(43) Veröffentlichungstag der Anmeldung: **15.05.2002**
(21) Anmeldenummer: 00811051.2
(22) Anmeldetag: 08.11.2000
(51) Int. Cl.: B01D 29/01, B01D 29/60, B01D 29/66, B01D 29/86, B01D 29/90, B01D 29/94, B01D 36/04

(54) **Verfahren und Filtervorrichtung zur Reinigung einer verschmutzten Kühlschmierflüssigkeit**

(71) Anmelder: Schneeberger, Jürg, 4900 Langenthal (CH)
(72) Erfinder: Schneeberger, Jürg, 4900 Langenthal (CH)
(74) Vertreter: Roshardt, Werner Alfred, Dipl.-Phys.

(57) **Zusammenfassung**

Beim Verfahren zur Reinigung einer verschmutzten Kühlschmierflüssigkeit **(3)** einer Werkstückbearbeitungseinrichtung **(5)** in einer Umlaufförderung wird die verschmutzte Kühlschmierflüssigkeit in ein vertikal stehendes Filtergehäuse **(7)** unterhalb einer Filtereinheit **(9)** hineingefördert, gereinigte Kühlschmierflüssigkeit oberhalb der Filtereinheit **(9)** der Werkstückbearbeitungseinrichtung **(5)** zur Kühlung und Schmierung eines Werkstücke bearbeitenden Werkzeugs zugeführt und herausgefilterter Schmutz im unteren Bereich **(27)** der Filtergehäuses **(7)** abgelagert wird.

Es handelt sich hier um ein einfaches und preisgünstiges Verfahren zur Filterung insbesondere feinkörnig verschmutzter Kühlschmierflüssigkeiten bei einer Umlaufförderung einer Werkstückbearbeitungseinrichtung bzw. eine Vorrichtung hierzu, welche zuverlässig arbeitet. Vorzugsweise weist die Filtervorrichtung eine reinigende Rückspülung für ihre Filtereinheit **(9)** auf.

## Beschreibung

### Technisches Gebiet

Die Erfindung betrifft ein Verfahren gemäß dem Oberbegriff des Patentanspruchs 1 sowie eine Filtervorrichtung gemäß dem Oberbegriff des Patentanspruchs 3.

Kühlschmierflüssigkeiten werden hauptsächlich in der Metallverarbeitung verwendet. Sie dienen zum Kühlen des Werkstücks an der Bearbeitungsstelle und des bearbeitenden Werkzeugs sowie auch zum Wegtransport des abgearbeiteten Materials. Als Kühlschmierflüssigkeiten werden beispielsweise wässrige Lösungen, Öl in WasserEmulsionen und Seifenöle eingesetzt. Viele Kühlschmierflüssigkeiten sind auf Mineralölbasis hergestellt. Mit Kühlschmierflüssigkeiten wird beim Schleifen, Sägen, Fräsen, Bohren und Hohnen gearbeitet. Damit die Kühlschmierflüssigkeit in einer Umlaufförderung über einen größeren Zeitraum zum Kühlen und Schmieren verwendet werden kann, muss sie von dem abgearbeiteten Material befreit werden. Eine Reinigung einer verschmutzten Kühlschmierflüssigkeit vom abgearbeiteten Material erfolgt in einer Filtervorrichtung. Besondere Anforderungen werden an eine Filtervorrichtung für Schleifbearbeitungeinrichtungen gestellt, da hier der Materialabrieb kleine Partikel im Mikro- und Millimeterbereich enthält.

Es sind die nachfolgend angeführten Filtermethoden zur Reinigung von Kühlschmierflüssigkeiten bei Bearbeitungseinrichtungen bekannt:

Bei einem Papier-Bandfilterverfahren zur Reinigung einer mit Schleifabrieb beladenen Kühlschmierflüssigkeit wurde eine Filterpapierbahn ab Rolle in eine Filtervorrichtung zugeführt. Durch eine geeignete Führung der Papierbahn ergab sich die Bildung eines Filtersees. Die zu filternde Flüssigkeit trat im Filtersee aufgrund der Schwerkraft nach unten durchs Papier bzw. zusätzlich durch den sich mittlerweile abgelagerten Filterkuchen hindurch. Die Durchtrittskräfte konnten durch Anlegen eines Vakuums unterhalb der Papierbahn erhöht werden.

Bei anderen Filtervorrichtung wurde die Filterpapierbahn um eine Trommel geführt, wodurch der Flüssigkeitspegel über der Papierbahn höher gehalten werden konnte. Die Trommel musste aber seitlich abgedichtet werden. Die Filterpapierbahn konnte auch umlaufend ausgebildet werden.

Es handelte sich hier um eine einfache und preisgünstige Filtervorrichtung, welche jedoch bei kleinen Schmutzpartikeln und verhältnismäßig hochviskoser (verhältnismäßig "zäher") Kühlschmierflüssigkeit eine schlechte Filterwirkung ergab.

Zum Filtern konnte auch eine Zentrifuge verwendet werden. Die mit Abrieb beladene Kühlschmierflüssigkeit durchlief hierbei die Zentrifuge, wobei sich der Abrieb im Filtertopf ansammelte, der dann ausgewechselt wurde. Sofern der Abrieb mit Blick auf die Kühlschmierflüssigkeit ein hohes spezifisches Gewicht hatte, ergab sich eine gute Ausfilterung. Nachteilig war jedoch der Energieverbrauch der Zentrifuge, die Erwärmung der Kühlschmierflüssigkeit und der erzeugte Lärm.

Eine äußerst einfache Filtervorrichtung arbeitete mit einem Zyklon. Hierbei wurde die mit Schmutz beladene Kühlschmierflüssigkeit in ein rotationssymmetrisches nach unten konisch zulaufendes Gehäuse unter einer Rotationsbewegung eingeleitet. Die Zentrifugal- und Gravitaitonskräfte trieben den Schmutz nach außen und unten, die gesäuberte Flüssigkeit wurde oben weggeführt. Es handelte sich hier um eine einfache und preisgünstige Filtervorrichtung, welche jedoch nur eine geringe Filterwirkung hatte.

Es kann auch der Kühlschmierflüssigkeit ein Filterhilfsmittel (meistens in Pulverform, z. B. Cellulose) beigegeben werden. Dieses Filterhilfsmittel band den feinkörnigen Schmutz zu grobkörnigen Partikeln, welche dann zuverlässig beim Durchgang durch ein (Metall-) Sieb abgefangen werden konnten. Ein derartiges Filterverfahren erzeugte eine sehr gute Ausfilterung. Es entstand hierbei durch das Filterhilfsmittel jedoch ein unreiner Schlamm, dessen Entsorgung problematisch und deshalb teuer war.

Eine weitere Variante einer Filtervorrichtung hatte eine Hilfspumpe, mit der die verschmutze Kühlschmierflüssigkeit in einen Druckbehälter gefördert wurde. In diesem Druckbehälter befanden sich eine oder mehrere Filtertrommeln. Die Filtertrommeln waren beispielsweise Metallzylinder mit spaltförmigen Durchbrüchen. Im Druckbehälter konnten auch sogenannte Filterkerzen angeordnet werden. Die Filterkerzen waren aufeinander geschichtete Kunststoff- oder Papierrondellen, welche zwischen den Rondellen einen Filterspalt bildeten. Die Spaltbreite bestimmte die Filterfeinheit. Außen an der bzw. den Filtertrommeln war ein Abstreifmechanismus angeordnet, mit dem abgelagertes Material abgestreift werden konnte. Es konnte aber auch eine sogenannte Rückspülung mit sauberer Kühlschmierflüssigkeit vorgenommen werden. Eine derartige Filtervorrichtung erreichte eine sehr gute Filterung auch von Schmutzpartikeln im Mikrometerbereich. Es wurde jedoch ein relativ hoher Druck benötigt, um einen ausreichenden Flüssigkeitsdurchtritt durch die Spalte zu erreichen. Hierdurch ergab sich eine Erwärmung der Flüssigkeit. Es handelte sich hier um eine sehr teure Anlage.

Bei einer weiteren bekannten Filtervorrichtung wurde einem Druckbehälter mit einer Filterpatrone kontinuierlich verschmutzte Kühlschmierflüssigkeit mit einer Pumpe unter Druck zugeführt. Durch die kontinuierliche Zufuhr verschmutzter Flüssigkeit füllte sich die Filterpatrone mit Schmutz worauf der aufzubringende Druck anstieg. Bei Erreichen eines vorgegebenen Grenzdruckes wurde dann die Filterpatrone ausgewechselt. Diese Filtervorrichtung hatte eine gute Filterwirkung. Je nach vorhandenem Schmutzanfall mussten jedoch die Patronen in der Regel schnell ausgewechselt werden. Zudem entstand bei der Bildung eines Filterkuchens an den Filterflächen schnell der Bedarf nach einem hohem Hilfsdruck. Wurde ein höherer Hilfsdruck aufgebracht, sank dann leider die Qualität der Filterwirkung. Als nachteilig hat sich hier auch noch der Preis der Patronen als teures Verbrauchsmaterial herausgestellt.

Bei einer weiteren Filtervorrichtung wurde ein Tank mit einem feinen Kiesbett verwendet. Ähnlich der Reinigung von Regenwasser im Boden, blieb der Schmutz im feinen Kies hängen. Sobald eine Verschmutzung des Kiesbettes den Druck zum Durchtreiben der zu reinigenden Flüssigkeit durch das Kiesbett auf einen vorgegebenen Wert anstiegen ließ, wurde ein Rückspülvorgang zur Reinigung des Kiesbettes eingeleitet. Eine derartige, verhältnismäßig teure Filtervorrichtung hatte eine gute Reinigungswirkung von verschmutzten Wasseremulsionen; Öle waren jedoch nicht filtrierbar.

In einer anderen Filtervorrichtung wurde die verschmutzte Kühlschmierflüssigkeit über eine sich langsam drehende Magnettrommel geleitet, an der dann magnetisierbare Schmutzpartikel haften blieben, welche später in einen Reinigungsbehälter abgestreift wurden. Es handelte sich hier um eine einfache Vorrichtung, welche jedoch nur ein Entfernen magnetisierbarer Schmutzpartikel gestattete; auch war der Durchsatz zu reinigender Kühlschmierflüssigkeit mengenmäßig begrenzt.

### Darstellung der Erfindung

### Aufgabe der Erfindung

Die Aufgabe der Erfindung ist es, eine einfaches und preisgünstiges Verfahren zur Filterung insbesondere feinkörnig verschmutzter Kühlschmierflüssigkeiten bei einer Umlaufförderung einer Werkstückbearbeitungseinrichtung bzw. eine Vorrichtung hierzu zu schaffen, welche zuverlässig arbeitet.

### Lösung der Aufgabe

Die Aufgabe wird durch die Merkmale des Patentanspruchs 1 bzw. 3 gelöst.

Beim erfindungsgemäßen Verfahren wird die verschmutzte Kühlschmierflüssigkeit in ein vertikal stehendes Filtergehäuse unterhalb einer Filtereinheit hineingefördert, gereinigte Kühlschmierflüssigkeit dann oberhalb der Filtereinheit der Werkstückbearbeitungseinrichtung zur Kühlung und Schmierung eines Werkstücke bearbeitenden Werkzeugs zugeführt und herausgefilterter Schmutz im unteren Bereich der Filtergehäuses abgelagert wird.

Vorzugsweise wird die gereinigte Kühlschmierflüssigkeit zwischengespeichert und lediglich bedarfsweise aus dem Zwischenspeicher der Werkstückbearbeitungseinrichtung zugeführt und die verschmutzte Kühlschmierflüssigkeit lediglich intermittierend in das Filtergehäuse hineingefördert. Die Zeit zwischen den intermittierenden Zuführphasen wird für einen Rücklauf bereits gereinigter Kühlschmierflüssigkeit durch die Filtereinheit verwendet. Durch diesen Rücklauf gereinigter Kühlschmierflüssigkeit erfolgt eine rückspülende Reinigung der Filtereinheit; die Kühlschmierflüssigkeit "drückt " in den "Filterkanälen" sitzende, in der Regel volumenvergrößerte Verunreinigung heraus. Durch die "Volumenvergrößerung" entziehen sich die Verunreinigungen verstärkt der Brownschen Molekularbewegung und sinken schneller zu Boden.

In einer bevorzugten Ausführungsvariante wird die verschmutzte Kühlschmierflüssigkeit derart in das Filtergehäuse hineingefördert, dass sich ein rotierendender Strömungsverlauf unterhalb der Filtereinheit (9) ergibt. Diese rotierende Strömung reduziert durch einen Abwascheffekt einen Schmutzansatz an der Filtereinheitunterseite.

Diese rotierende, auch Wirbel aufweisende Strömung könnte im unteren Bereich des Filtergehäuses bereits abgesetzte Verunreinigungen wieder aufwirbeln. Um dieses zu vermeiden, wird die verschmutzte zu reinigende Kühlschmierflüssigkeit oberhalb des unteren Schmutzablagerungsbereichs strömungsberuhigt.

Die erfindungsgemäße Filtervorrichtung zur Reinigung einer verschmutzten Kühlschmierflüssigkeit in einer Umlaufförderung für eine Bearbeitungseinrichtung hat eine in einem vertikal stehenden Filtergehäuse annähernd horizontal liegende Filtereinheit. Auf die lediglich annähernd horizontale Lage wird in der Beschreibung näher eingetreten. Ferner hat die Filtervorrichtung eine Einlassöffnung für die verschmutzte Kühlschmierflüssigkeit unterhalb der Filtereinheit, ein Fördermittel, mit dem die verschmutzte Kühlschmierflüssigkeit durch die Einlassöffnung förderbar ist, einen Auslass für die von Verunreinigungen gereinigte, der Werkstückbearbeitungseinrichtung wieder zuführbare Kühlschmierflüssigkeit oberhalb der Filtereinheit und einen Absetzbereich für den aus der Kühlschmierflüssigkeit herausgefilterten Schmutz im unteren Bereich des Filtergehäuses.

In einer bevorzugten Ausführungsvariante ist eine erste, mit einem ersten Ventil verschließbare, im Bodenbereich des Filtergehäuses angeordnete Auslassöffnung zum Ablassen von absetzbarem Schmutz vorhanden. Ferner hat die Filtervorrichtung vorzugsweise eine zweite, mit einem zweiten Ventil auf- und zumachbare Auslassöffnung unterhalb der Einlassöffnung, durch die verschmutzte Kühlschmierflüssigkeit vor Öffnen des ersten Ventils ablassbar ist, damit möglichst wenig Kühlschmierflüssigkeit beim Ablassen von abgesetztem Schmutz mitkommt.

Eine Verlängerung der Einsatzzeit der Filtereinrichtung bis zu einer Woche und mehr kann dadurch erreicht werden, dass ein Schmutzflüssigkeitstank vorhanden ist, in den die Kühlschmierflüssigkeit von der Werkstückbearbeitungseinrichtung sammelnd einleitbar sowie mit dem Fördermittel intermittierend vorzugsweise in Abhängigkeit seines Füllzustands durch die Einlassöffnung förderbar sowie eine Anordnung des Auslasses in einem Abstand oberhalb der Filtereinheit vorgesehen ist. Das Fördermittel ist insbesondere derart ausgebildet, dass bei Nichtförderung ein Rücklauf verschmutzter Kühlschmierflüssigkeit aus dem Filtergehäuse in den Schmutzflüssigkeitstank zur rückspülenden Reinigung der Filtereinheit durch nachdrückende gereinigte Kühlschmierflüssigkeit aus einem Bereich oberhalb der Filtereinheit erfolgt.

In einer speziellen Ausführungsvariante wird die Einlassöffnung für die mit Verunreinigungen beladene Kühlschmierflüssigkeit derart im Filtergehäuse angeordnet, dass die eingelassene Flüssigkeit in eine rotierende Bewegung um eine vertikale Achse des Filtergehäuses erfolgt. Das Filtergehäuse wird man bevorzugt rotationssymmetrisch ausbilden, muss es aber nicht. Die rotationssymmetrische Ausbildung unterstützt die Ausbildung einer rotierenden Flüssigkeit im Filtergehäuse. Wird nun auch noch der Filtergehäuseteil unterhalb der Filtereinheit nach unten konisch zusammenlaufend ausgebildet, so erfolgt eine Sammelbewegung der sich absetzenden Verunreinigungen zu einem kleinen Bereich, hier der Konusspitze hin. Die konische Verjüngung muss nicht, wie unten dargestellt, unmittelbar an der Filtereinheit beginnen. Es kann dort auch ein kreiszylindrischer Filtergehäuseteil vorhanden sein, der erst später in einem konisch zusammenlaufenden Gehäuseteil übergeht. Auch könnte der Einlass in diesem kreiszylindrischen Teil angeordnet sein. Ein sofort nach dem Ort der Filtereinheit beginnender konisch zusammenlaufender Gehäuseteil hat jedoch den Vorteil der preisgünstigeren Herstellung der gesamten Filtervorrichtung. Stattet man nämlich den oberen Gehäuseteil mit dem Auslass für die gereinigte Kühlschmierflüssigkeit mit einem kreiszylindrischen Durchmesser aus, so kann die Filtereinheit ohne besondere mechanische Elemente direkt auf den Übergang zum konischen Gehäuseteil aufgelegt werden.

Eine besondere Beachtung ist der Lage der Einlassöffnung für die verschmutzte Kühlschmieröffnung zu teil geworden. Es ist eine derartige vertikale Höhe gewählt worden, dass einerseits ein großes Absetzvolumen für die Verunreinigungen verbleibt. Andererseits ist die Lage mit Blick auf eine Optimierung der Flüssigkeitsbewegung auf der Unterseite der Filtereinheit gewählt worden. Diese Flüssigkeitsbewegung sollte derart sein, dass sich möglichst keine oder nur wenig Verunreinigungen an der Unterseite der Filtereinheit absetzen und festhalten können, damit diese eine lange Lebensdauer bzw. Betriebszeit erreicht, und die gesamte Filtereinheit möglichst gleichmäßig über ihre gesamte Oberfläche angeströmt wird. Die Flüssigkeitsbewegung ist nun derart gewählt, dass auf der Unterseite ein "Abwascheffekt" erzeugt wird. Dieser "Abwascheffekt" wird bei Vorhandensein einer rotierenden Flüssigkeit noch verstärkt.

Das "Sauberwaschen" der Filtereinheit kann durch eine weitere Vorkehrung noch unterstützt werden. Wird nämlich eine Pumpe, mit der die verschmutzte Kühlschmierflüssigkeit durch die Einlassöffnung in das Filtergehäuse gepumpt wird, derart angeordnet, dass das Pumpniveau unterhalb der Einlassöffnung liegt, so erfolgt bei ausgeschalteter Pumpe ein Flüssigkeitsrückfluss. Der Flüssigkeitsrückfluss wird von der über der Filtereinheit sich befindenden gereinigten Kühlschmierflüssigkeit gespiesen. Hierdurch ergibt sich bei jedem Abschalten ein gewünschter Rückspüleffekt für die Filtereinheit.

Spezielles Augenmerk ist darauf gerichtet worden, dass im Schmutzflüssigkeitstank kein Absetzen von Verunreinigungen erfolgt. Es müsste ansonsten auch dort eine Entnahmevorrichtung für abgesetzte Verunreinigungen vorhanden sein. Die in diesem Tank angeordnete Pumpe hat deshalb ein Saugrohr, das bis in den Bodenbereich des Tanks reicht. Es entsteht hierdurch eine Absaugströmung, welche abgesetzte Verunreinigungen auf dem Boden aufwirbeln würde. Um diesen Aufwirbelungseffekt noch zu unterstützen, kann die Einleitung von verschmutzter Kühlschmierflüssigkeit von der Bearbeitungseinheit im Bodenbereich des Tanks erfolgen.

Oben ist bereits ausgeführt worden, dass man bestrebt ist, möglichst lange Wege für die mit Verunreinigungen beladene Kühlschmierflüssigkeit im Filtergehäuse zu erreichen. Eine Verlängerung ist durch eine Ausbildung von an der Filtergehäuseinnenseite angeordneten, axial verlaufenden Absetzstegen erreichbar. Diese Absetzstege wird man bevorzugt zwischen dem Einlass und dem zweiten Auslass anordnen. Strömungsmäßig ergibt sich hinter den Stegen dann ein sogenannter Kehrbereich für die Flüssigkeit, wie sie auch bei Verbauungen in Flüssen verwendet werden. Auch diese Kehrbereiche fördern ein Absetzen von in der Flüssigkeit enthaltenen Verunreinigungen.

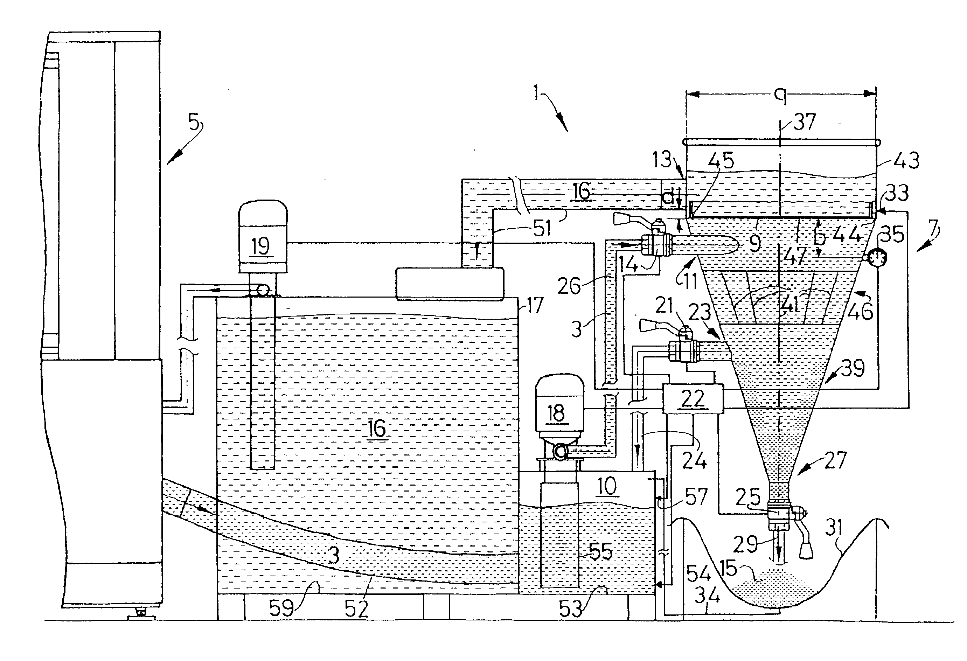

### Kurze Beschreibung der Zeichnung

Im Folgenden werden Beispiele des erfindungsgemäßen Verfahrens und der erfindungsgemäßen Filtervorrichtung anhand einer Zeichnung näher erläutert. Weitere Vorteile der Erfindung ergeben sich aus dem Beschreibungstext. Die einzige Zeichnung zeigt eine schematische Darstellung der erfindungemäßen Filtervorrichtung.

### Wege zur Ausführung der Erfindung

Die in der einzigen **Figur** dargestellte Filtervorrichtung **1** dient zur Reinigung einer verschmutzten Kühlschmierflüssigkeit **3** in einer Umlaufförderung für eine Werkstückbearbeitungseinrichtung **5.** Die Filtervorrichtung **1** hat eine in einem vertikal stehenden Filtergehäuse **7** annähernd horizontal liegende Filtereinheit **9.** Die Filtereinheit **9** ist vorzugsweise eine einstückige, poröse Matte. Sie füllt den gesamten umlaufenden Strömungsquerschnitt **q** der Kühlschmierflüssigkeit im Filtergehäuse **7** aus. Die von der Bearbeitungseinrichtung **5** kommende verschmutzte Kühlflüssigkeit **3** wird in einen Schmutzflüssigkeitstank **10** eingeleitet. Aus diesem Schmutzflüssigkeitstank **10** wird die Kühlschmierflüssigkeit **3** über eine mit einem Ventil **14** verschließbare Einlassöffnung **11** unterhalb der Filtereinheit **9** in das Filtergehäuse **7** mit einer Pumpe **18** eingepumpt. Ein Auslass **13** für die von Verunreinigungen **15** gereinigte Kühlschmierflüssigkeit **16** liegt in einem vertikalen Abstand d oberhalb der Filtereinheit **9.** Die von Verunreinigungen **15** gereinigte Kühlflüssigkeit **16** wird in einen "Saubertank" **17** geleitet, von dem sie dann mit einer Pumpe **19** zur Bearbeitungeinrichtung **5** für eine Wiederverwendung bedarfsweise gefördert wird. Eine zweite, mit einem ersten Ventil **21** fakultativ über eine Steuereinheit **22** ganz oder teilweise verschließbare Auslassöffnung **23** befindet sich unterhalb der Einlassöffnung **11.**

Das Filtergehäuse **7** hat ferner eine weitere, mit einem zweiten Ventil **25** verschließbare, in dessen Bodenbereich **25** angeordnete Auslassöffnung **29.** Diese Auslassöffnung **29** dient zum Ablassen der abgesetzten Verunreinigungen **15** (in der Regel als Schlamm oder Schmutz bezeichnet) in ein Schlammbecken **31.**

Der tiefste Ort des Bodens des Schlammbeckens **31** liegt niveaumäßig über dem oberen höchst möglichen Flüssigkeitsniveau **32** im Schmutzflüssigkeitstank **10,** damit im Schlammbecken **32** sich ausscheidende Kühlschmierflüssigkeit über eine Rohrleitung **34** in den Tank **10** fließen kann. Ist ein derartiger Niveauunterschied aus platzgründen nicht möglich, ist die ausgeschiedene Flüssigkeit abzuschöpfen und in den Tank **10** zu gießen bzw. mit einer Pumpe dorthin zu pumpen.

Ferner ist an der Innenwand des Filtergehäuses **7** ein Verunreinigungssensor **35,** der um einen Höhenwert **b** unterhalb der Einlassöffnung **11** angeordnet ist, vorhanden. Als Verunreinigungssensor **35** kann ein einfacher und preisgünstiger Drucksensor verwendet werden. Läßt nämlich die Filterwirkung der Filtereinheit **9** wegen Verschmutzung nach, so tritt weniger Flüssigkeit durch sie hindurch, worauf der Druck der Pumpe **18** ansteigt. Es muss dann der unten beschriebene Reinigungsprozess der Filtereinheit **9** eingeleitet werden. Anstelle eines Drucksensors können auch andere Sensoren, wie beispielsweise optische Transmissionssenoren, magnetische Sensoren bei Bearbeitung von Eisenmetallen, ... verwendet werden.

Auch kann mit einem derartigen Sensor **35** festgestellt werden, ob an diesem Ort bzw. in dieser Höhe an der Innenseite des Filtergehäuses **7** sich Verunreinigungen anlagern. Wenn ja, ist ein Verunreinigungsaufbau von unten her erfolgt. Im Filtergehäuse haben sich dann zu viel Verunreinigungen angesammelt; ein Auslass durch die Auslassöffnung **29** muss vorgenommen werden. Dieser Auslass kann nun automatisch über eine Meldung an die Steuereinheit **22,** welche dann automatisch eine Öffnung des Ventils **21** und anschließend des Ventils **25** zum Ablassen von Verunreinigungen in das Schlammbecken **31** vornehmen würde, erfolgen. Durch ein vorgängiges Öffnen des Ventils **21** wird Kühlschmierflüssigkeit in den Tank **10** überführt; es kommt dadurch mit den abgelagerten, abzulassenden Verunreinigungen nicht zu viel Flüssigkeit mit.

Die Einlassöffnung **11** ist nun am Mantel des Filtergehäuse **7** tangential eingeführt, damit die eingelassene, verschmutzte Kühlschmierflüssigkeit **3** eine rotierende Bewegung vollführt. Um diese rotierende Bewegung zu unterstützen, ist das Filtergehäuse **7** rotationssymmetrisch zu einer Gehäuseachse **37** ausgebildet.

Der Gehäuseunterteil **39** ist unterhalb der Filtereinheit **9** nach unten konisch zusammenlaufend ausgebildet. Durch dieses Zusammenlaufen erfolgt ein Zusammenführen der sich absetzenden Verunreinigungen auf ein kleines Gebiet im Konusspitzenbereich **27,** in dem dann auch die Auslassöffnung **29** für die Verunreinigungen angeordnet ist. Der Übergang vom kreiszylindrischen Oberteil **43** des Filtergehäuses **7,** in dem der Auslass **13** angeordnet ist, und dem konisch zusammenlaufenden Unterteil **39** ergibt eine umlaufende Kante **44,** die ein Auflagering für die Filtereinheit **9** eingeschweisst ist. Anstatt die Filtereinheit **9** auf den eingeschweissten Ring aufzulegen bzw. zu befestigen kann sie auch auf den an die Kante **44** anschließenden Bereich aufgelegt bzw. befestigt werden. Der Rand **45** der Filtereinheit **9** wird mit abdichtenden Mittel, wie beispielsweise einer umlaufenden Gummilippe, versehen. Wird jedoch mit einem erhöhten "Filterdruck" mittels der Pumpe **18** gearbeitet, ist die Filtereinheit herausnehmbar im Filtergehäuse zu befestigen.

An der Filtergehäuseinnenseite sind höhenmäßig zwischen der Einlassöffnung **11** und der zweiten Auslassöffnung **23** axial verlaufende Strömungsberuhigungsstege **41** vorhanden. Die Stege **41** dienen dazu, eine Strömungsberuhigung zu erzeugen, damit bereits abgesetzte Verunreinigungen **15** durch erneut eingebrachte, verunreinigte Kühlschmierflüssigkeit, welche mit einer rotierenden Strömung die Filterunterseite **47** möglichst sauber "abwäscht", nicht mehr aufgewirbelt werden können. Die Stegeanordnung kann ein einfaches Gitter sein. Es ist hier als eine Anordnung mit radial liegenden Platten gewählt worden, welche radiusmäßig bis etwa 80 % an die Gehäuseachse **37** heranreichen. Die Stege könnten auch den gesamten Gehäusequerschnitt ausfüllen. Der freie zentrale Bereich hat sich jedoch bewährt, falls aus irgend einem Grund eine zu hohe Verschmutzung anfallen würde. In diesem Fall kann dann nämlich von oben mit einer Stabbürste der Gehäuseinnenraum gereinigt bzw. die abgelagerten Verschmutzungen durch die Auslassöffnung **29** herausgedrückt werden.

Die Einlassöffnung **11** ist in einer derartigen vertikalen Höhe in der Wand des Filtergehäuses **7** angeordnet, dass ein möglichst großes Absetzvolumen für die Verunreinigungen der Kühlschmierflüssigkeit verbleibt. Das Absetzvolumen ist zwar durch die konische Ausgestaltung des Unterteils **39** verringert; es ergibt sich hierdurch jedoch eine einfache Entnahmemöglichkeit für die abgesetzten Verunreinigunen. Ferner ist die vertikale Höhe der Einlassöffnung **11** derart gewählt, dass die Kühlmittelströmung die Unterseite **47** der Filtereineinheit **9** gleichmäßig über deren gesamte Oberfläche gleichmäßig beströmt und die Strömungsgeschwindigkeit wenigstens noch so hoch ist, dass sich an der Unterseite **47** absetzender Schmutz während des Betriebs möglichst vollständig abwäscht. Der Abwaschvorgang wird zudem durch die rotierende Strömungsbewegung (tangentiale Einlassöffnung **11)** sowie die durch die Ansetzstege **41** hervorgerufenen Strömungswirbel unterstützt.

Der Tank **10** hat einen oberen und einen unteren Niveausensor **57** und **54.** Die Pumpe **18** wird immer dann eingeschaltet, wenn das Niveau **32** des verschmutzten Kühlschmiermittels den oberen Niveausensor **57** überschreitet und ausgeschaltet bei Unterschreiten des unteren Niveausensors **54.** Eine Reinigung der Filtereinheit wird ferner durch einen Rückspüleffekt erreicht. Dieser Rückspüleffekt ergibt sich dadurch, dass das Flüssigkeitsniveau **32** der verschmutzten Kühlschmierflüssigkeit im Tank **10** unterhalb der Unterseite **47** der Filtereinheit **9** liegt. Bei ausgeschalteter Pumpe **18** strömt nun, da die ausgeschaltete Pumpe **18** nicht dichtet, verschmutzte Kühlschmierflüssigkeit durch die Einlassöffnung **11** in den Schmutzflüssigkeitstank **10** zurück. Durch das Ausströmen der verschmutzten Kühlschmierflüssigkeit wird gereinigte Kühlschmierflüssigkeit oberhalb der Filtereinheit **9** sowie aus der Rohrleitung **51** zum Saubertank **16** nachgesogen. Diese nachgesogene Flüssigkeit reinigt die Filtereinheit **9** von auf ihrer Unterseite **47** abgesetzten Verunreinigungen

Nachfolgend wird kurz der Reinigungsvorgang umrissen. Von der Bearbeitungsvorrichtung **5** wird die mit Verunreinigungen versehene Kühlschmierflüssigkeit **3** über eine Rohrleitung **52** in den Schmutzflüssigkeitstank **10** geleitet. Die Einleitung erfolgt bevorzugt im Bodenbereich **53** des Tanks **10,** um dort bereits abgesetzte Verunreinigungen aufzuwirbeln. Befindet sich derart viel verschmutzte Kühlschmierflüssigkeit im Tank **10,** dass eine im oberen Bereich des Schmutztanks **10** angeordnete Niveausonde **57** anspricht, wird die Pumpe **18** in Gang gesetzt. Mit der Pumpe **18,** welche ein bis in den Bodenbereich **53** reichendes Saugrohr **55** hat, um bevorzugt bereits im Bodenbereich **53** angereicherte Verunreinigungen aufzunehmen, wird die verschmutzte Kühlschmierflüssigkeit **3** über das in der Regel immer geöffnete Ventil **14** durch die in der konisch nach unten zusammenlaufenden Wand des Filtergehäuseunterteils **47** angeordnete Einlassöffnung **11** tangential eingeleitet. Hierdurch rotiert die verschmutzte Kühlschmierflüssigkeit unterhalb der Filtereinheit **9** unter Abwaschen von Verunreinigungen. Die Pumpe **18** pumpt nun weitere verschmutzte Kühlschmierflüssigkeit aus dem Tank **10** bis dessen unterer Niveausensor **54** anspricht. D. h. die Förderleistung der Pumpe **18** ist mindestens so groß wie diejenige der Pumpe **19,** welche nur bei einer Werkstückbearbeitung läuft. Spricht der Sensor **54** an, wird die Förderung der Pumpe **18** unterbrochen und gesäuberte Kühlschmierflüssigkeit drückt rückspülend durch die Filtereinheit **9.** Der abgelöste Schmutz wandert gravitationsbedingt in den Gehäuseunterteil **39** durch die Stege **41** hindurch. Dieser Vorgang läuft unabhängig von der Förderung durch die Pumpe **19.**

Die Kühlschmierflüssigkeit wird zwar äußerst gut durch die Filtereinheit **9** gereinigt, es verbleiben jedoch immer noch Verunreinigungen in der Flüssigkeit, welche sich dann am Boden **59** des Saubertanks **17** absetzen. Diese abgesetzten Verunreinigungen würden eine manuelle Reinigung des Tanks **17** (etwa einmal pro Monat) nach sich ziehen. Um diese Reinigung zu automatisieren, kann ein ventillatorartiger Quirl im Bodenberich oder eine zusätzliche im Bodenbereich wirkende, in den Schmutzflüssigkeitstank **10** führende Abpumpvorrichtung vorgesehen werden.

Eine Filtervorrichtung, mit der die Kühlschmierfüssigkeit von Schleifmitteln befreit werden kann, kann auch zur Abtrennung von Fräs-, Schneid-, Säge-und Bohrmetallpartikeln dienen. Die oben beschriebene Filtervorrichtung ist nicht auf eine Abscheidung von Metallpartikeln beschränkt; es können auch Nicht-Metalle und organische Partikel ausgeschieden werden, sofern sie ein spezifisches Gewicht haben, welches höher ist als das der Kühlschmierflüssigkeit.

Die erfindungsgemäße Filtervorrichtung wird vorzugsweise derart ausgelegt, dass ein Ablassen der abgesetzten Verunreinigungen durch die Auslassöffnung **29** nur einmal pro Woche bei allgemeinen Reinigungsarbeiten notwendig ist.

Die allgemeine Steuereinheit **22** ist nicht notwendig. Es reicht, wenn die Pumpe **19** mit dem Ein- und Ausschalten der Werkstückbearbeitungseinheit **5** gekoppelt ist und die Pumpe **18** lediglich über die beiden Füllstandssensoren **54** und **57** im Tank **10** ein- und ausgeschaltet wird.

Die Filtereinheit **9** füllt bei dem oben beschriebenen Ausführungsbeispiel den gesamten Querschnitt im Filtergehäuse **7** aus. Selbstverständlich können auch mehrere kleinere Filtereinheiten über beispielsweise einem Lochblech angeordnet werden. Statt einer einlagigen können auch mehrlagige Filtereinheiten verwendet werden.

Auf das Ventil **14** kann in einer vereinfachten Ausführungsform verzichtet werden, da zu Filter reinigenden Rückspülzwecken bei jedem Ausschalten der Pumpe **18** ein Flüssigkeitsrücklauf erwünscht ist. Das Ventil **14** ist lediglich dann von Vorteil, wenn aus Raumoptimierungszwecken das Volumen des Schmutzflüssigkeitstanks **10** so klein gewählt ist, dass beim "Reinigungsrückströmen" dessen Überlaufen zu befürchten wäre und nur jeweils eine rückströmende Teilmenge vorgesehen ist.

Das Filtergehäuse **7** kann ferner einen Flüssigkeitsstandmesser **33** haben, der oberhalb der Filtereinheit **9** mit einer Toleranz behaftet etwa in Höhe des Auslasses **13** angeordnet ist. Der Flüssigkeitsstandmesser **33** ist mit der Steuereinheit **22** verbunden und soll verhindern, falls eine Filtereinheit verwendet wird, die nicht trocken laufen darf, dass diese immer feucht bleibt. Aus diesem Grund ist die Filtereinheit **9** auch um einen Höhenwert **d** unterhalb der Unterkante des Auslasses **13** abgeordnet. Spricht der Flüssigkeitsstandmesser **33** an, erfolgt eine Zwangsschließung der Ventile **21** und **25** sowie bei nicht laufender Pumpe **18** zusätzlich von Ventil **14.**

Die Filtereinheit **9** muss nicht horizontal liegen, sie kann auch schräg angeordnet werden. Es muss jedoch gewährleistet sein, dass immer noch gereinigte Kühlschmierflüssigkeit für eine Rückspülung über annähernd die gesamte Filterbreite durchlaufen kann.

An der Unterseite **47** der Filtereinheit **9** muss nicht unbedingt eine rotierende Flüssigkeitsbewegung erfolgen. Es sollte irgend eine Flüssigkeitsbewegung vorhanden sein, welche eine Schmutzanlagerung vermindert. Ist eine derartige Flüssigkeitsbewegung nicht vorhanden, ist die Wirkung der Filtervorrichtung nicht eingeschränkt; es werden lediglich die Zeiträume für eine vorzunehmende Reinigung verkürzt.

Anstelle nur eines einzigen Filtergehäuses können auch mehrere in Reihe hintereinander geschaltet werden. Hierzu wird der jeweilige Auslass **13** mit dem Einlass **11** des folgenden Filtergehäuses verbunden. Sofern der Pumpdruck der Pumpe **18** für mehrere hintereinandergeschaltete Filtergehäuse nicht ausreichend ist, müssten weitere Pumpen in diese Verbindung eingebaut werden. Die einzelne Filtergehäuse wird man mit unterschiedlichen Filtereinheiten ausstatten, um unterschiedliche Materialien bzw. Verschmutzungen mit unterschiedlichen Durchmesser herauszufiltern.

Es müssen nicht wie oben beschrieben kompakte Filtereinheiten verwendet werden. Es kann als Filtereinheit **9** eine beispielsweise von einer Rolle kommende Filterbahn unter einer entsprechenden seitlichen Abdichtung durchgezogen werden. Analog kann eine Filtereinheit im Schlammbecken **31** ausgebildet werden.

Alle Ventile und Sensoren können über die Steuereinheit **22** automatisch bedient werden. In diesem Fall wird man bevorzugt auch die Filterzuführung von einer Filterrolle automatisieren.

Filterwechseln und die Bedienung der Ventile kann jedoch auch manuell erfolgen, da deren Betätigung zeitlich nicht allzu häufig erfolgen muss.

## Patentansprüche

1. Verfahren zur Reinigung einer verschmutzten Kühlschmierflüssigkeit **(3)** einer Werkstückbearbeitungseinrichtung **(5)** in einer Umlaufförderung, **dadurch gekennzeichnet, dass** die verschmutzte Kühlschmierflüssigkeit in ein vertikal stehendes Filtergehäuse **(7)** unterhalb einer Filtereinheit **(9)** hineingefördert, gereinigte Kühlschmierflüssigkeit oberhalb der Filtereinheit **(9)** der Werkstückbearbeitungseinrichtung **(5)** zur Kühlung und Schmierung eines Werkstücke bearbeitenden Werkzeugs zugeführt und herausgefilterter Schmutz im unteren Bereich **(27)** des Filtergehäuses **(7)** abgelagert wird.

2. Verfahren nach Anspruch 1, **dadurch gekennzeichnet, dass** die gereinigte Kühlschmierflüssigkeit zwischengespeichert, bedarfsweise aus dem Speicher **(17)** der Werkstückbearbeitungseinrichtung **(5)** zugeführt und die verschmutzte Kühlschmierflüssigkeit lediglich intermittierend in das Filtergehäuse **(7)** hineingefördert wird, wobei zwischen den Zuführphasen ein Rücklauf bereits gereinigter Kühlschmierflüssigkeit durch die Filtereinheit **(9)** für deren rückspülende Reinigung erfolgt, sowie vorzugsweise die verschmutzte Kühlschmierflüssigkeit derart in das Filtergehäuse **(7)** hineingefördert wird, dass sich ein rotierendender Strömungsverlauf unterhalb der Filtereinheit **(9)** ergibt, um einen Schmutzansatz an der Filtereinheitunterseite **(47)** zu reduzieren und insbesondere die verschmutzte zu reinigende Kühlschmierflüssigkeit oberhalb des unteren Schmutzablagerungsbereichs **(27)** strömungsberuhigt wird, um eine Aufwirbelung des herausgefilterten und bereits abgesetzten Schmutzes **(15)** zu vermeiden.

3. Filtervorrichtung **(1)** zur Reinigung einer verschmutzten Kühlschmierflüssigkeit **(3)** einer Werkstückbearbeitungseinrichtung **(5)** in einer Umlaufförderung zur Durchführung des Verfahrens gemäß Patentanspruch 1 oder 2, **gekennzeichnet durch** eine in einem vertikal stehenden Filtergehäuse **(7)** annähernd horizontal liegende Filtereinheit **(9),** eine Einlassöffnung **(11)** für die verschmutzte Kühlschmierflüssigkeit **(3)** unterhalb der Filtereinheit **(9),** ein Fördermittel **(18),** mit dem die verschmutzte Kühlschmierflüssigkeit **(3) durch** die Einlassöffnung förderbar ist, einen Auslass **(13)** für die von Verunreinigungen gereinigte, der Werkstückbearbeitungseinrichtung **(5)** wieder zuführbare Kühlschmierflüssigkeit oberhalb der Filtereinheit **(9)** und einen Absetzbereich **(39)** für den aus der Kühlschmierflüssigkeit herausgefilterten Schmutz im unteren Bereich des Filtergehäuses **(7).**

4. Filtervorrichtung **(1)** nach Anspruch 3, **gekennzeichnet durch** eine erste, mit einem ersten Ventil **(25)** verschließbare, im Bodenbereich **(27)** des Filtergehäuses **(7)** angeordnete Auslassöffnung **(29)** zum Ablassen von absetzbarem Schmutz **(15)** und vorzugsweise eine zweite, mit einem zweiten Ventil **(21)** auf- und zumachbare Auslassöffnung **(23)** unterhalb der Einlassöffnung **(11), durch** die verschmutzte Kühlschmierflüssigkeit **(3)** vor Öffnen des ersten Ventils **(25)** ablassbar ist, damit möglichst wenig Kühlschmierflüssigkeit beim Ablassen von abgesetztem Schmutz mitkommt.

5. Filtervorrichtung **(1)** nach Anspruch 3 oder 4 **gekennzeichnet durch** einen Schmutzflüssigkeitstank **(10),** in den die Kühlschmierflüssigkeit von der Werkstückbearbeitungseinrichtung **(5)** sammelnd einleitbar sowie mit dem Fördermittel **(18)** intermittierend vorzugsweise in Abhängigkeit seines Füllzustands **durch** die Einlassöffnung **(11)** förderbar ist, eine Anordnung des Auslasses **(13)** in einem Abstand **(d)** oberhalb der Filtereinheit **(9),** wobei das Fördermittel **(18)** insbesondere derart ausgebildet ist, dass bei Nichtförderung ein Rücklauf verschmutzter Kühlschmierflüssigkeit aus dem Filtergehäuse **(7)** in den Schmutzflüssigkeitstank **(10)** zur rückspülenden Reinigung der Filtereinheit **(9) durch** nachdrückende gereinigte Kühlschmierflüssigkeit aus einem Bereich oberhalb der Filtereinheit **(9)** erfolgt.

6. Filtervorrichtung **(1)** nach einem der Ansprüche 3 bis 5, **dadurch gekennzeichnet, dass** das Fördermittel als Pumpe **(18)** mit einem Pumpniveau **(32)** unterhalb der Einlassöffnung **(11)** ausgebildet ist, die Pumpe **(18)** vorzugsweise einen in den Bodenbereich **(53)** des Schmutzflüssigkeitstanks **(10)** reichenden Ansaugstutzen **(55)** hat sowie insbesondere die Einlassöffnung **(11)** derart im Filtergehäuse **(7)** angeordnet ist, dass die eingelassene Flüssigkeit **(3)** an der Unterseite **(47)** der Filtereinheit **(9)** in eine, vorzugsweise rotierende, Bewegung um eine vertikale Filtergehäuseachse **(37)** versetzbar ist.

7. Filtervorrichtung **(1)** nach einem der Ansprüche 3 bis 6, **dadurch gekennzeichnet, dass** das Filtergehäuse **(7)** bis auf die Ein- und Auslässe **(11, 13, 23)** rotationssymmetrisch ausgebildet ist und vorzugsweise der Filtergehäuseteil **(39)** unterhalb der Filtereinheit **(9)** nach unten konisch zusammenlaufend ausgebildet ist.

8. Filtervorrichtung **(1)** nach einem der Ansprüche 3 bis 7, insbesondere nach Anspruch 4, **gekennzeichnet durch** an der Filtergehäuseinnenseite höhenmäßig vorzugsweise zwischen der Einlassöffnung **(11)** und der zweiten Auslassöffnung **(23)** angeordnete, insbesondere axial verlaufende, Strömungsberuhigungsstege **(41),** welche eine Strömungsbewegung von der Einlassöffnung **(11)** her unterdrükken, damit ein Aufwirbeln bereits abgesetzten Schmutzes im unteren Bereich **(39)** des Filtergehäuses **(7)** vermieden wird.

9. Filtervorrichtung**(1)** nach einem der Ansprüche 3 bis 8, **dadurch gekennzeichnet, dass** die Filtereinheit **(9)** eine einstückige, poröse und entnehmbare Matte, insbesondere ein Papierfilter hat.
